# NEUE EUROPÄISCHE PATENTSCHRIFT

(11) **EP 0 615 111 B2**
(45) Veröffentlichungstag und Bekanntmachung des Hinweises auf die Entscheidung über den Einspruch: **29.12.1999**
(45) Hinweis auf die Patenterteilung: 09.10.1996
(21) Anmeldenummer: 93104058.8
(22) Anmeldetag: 12.03.1993
(51) Int. Cl.: G01D 3/02, G01D 3/08, F02P 7/06

(54) **Kurbel- oder Nockenwellensignalgeber**
Signal transmittor of a crankshaft or camshaft
Emetteur de signaux de vilebrequin ou d'arbre à cames

(43) Veröffentlichungstag der Anmeldung: 14.09.1994
(73) Patentinhaber: SIEMENS AKTIENGESELLSCHAFT, 80333 München (DE)
(72) Erfinder: Leiderer, Harald, Dipl.-Ing. (FH), W-8404 Wörth/Donau (DE); Hammer, Günter, Dipl.-Ing., W-8411 Sinzing (DE); Reupke, Wolfgang, Dipl.-Ing., W-8400 Regensburg (DE)

(56) Entgegenhaltungen:
- EP-A- 0 024 836
- EP-A- 0 366 619
- EP-A- 0 514 634
- EP-B- 0 017 933
- WO-A-86/03831
- DE-A- 3 714 271
- GB-A- 2 125 565
- JP-A- 4 235 313

## Beschreibung

Die Erfindung betrifft einen Kurbel- oder Nockenwellensignalgeber für Kraftfahrzeug-Brennkraftmaschinen nach dem Oberbegriff des Patentanspruchs 1.

Ein solcher Signalgeber ist aus EP-B-24 836 bekannt.

Bekannte Signalgeber der genannten Art tasten Zähne bzw. Segmente und Lücken eines drehenden Geberteils ab, wodurch zunächst ein analoges elektrisches Abbild der Oberfläche des Geberteils entsteht. Anschließend wird dieses analoge Sensorsignal in eine Folge diskreter, digitaler Zustandsmeldungen (Zahn, Lücke, Referenzzahn bzw. Referenzlücke) umgewandelt. Für diese Umwandlung wird mindestens eine Entscheidungsschwelle benötigt. Üblich sind auch zwei Schwellen, die beispielsweise durch einen Hysteresebetrag voneinander unterschieden sind.

Aus der EP 0 024 836 B1 ist ein Signalgeber bekannt, bei welchem das analaoge Sensorsignal mit einem Schwellwert verglichen wird, der dem aus dem kleinsten und größten Signalwert (dem positiven und negativen Spitzenwert) des Sensorsignals gebildeten Mittelwert entspricht.

Aus der DE 37 14 271 A1 ist ein induktiver Signalgeber mit einer Auswerteschaltung bekannt, die das Sensorsignal mit zwei Schwellwerten vergleicht, welche durch einen Komparator, der eine Schalthysterese aufweist, gebildet werden.

Aus der EP 0 514 634 A1 ist ein Verfahren zur Korrektur von Meßfehlern eines Meßdatenerfassungssystems bekannt, bei dem Meßsignale einer Meßwertauswertung zugeführt werden, wobei die Meßfehler mittels einer mathematischen Funktion berichtigt werden, deren Parameter in spezieller Weise ermittelt und in einem nichtflüchtigen Speicher des Meßdatenerfassungssystems abgelegt werden.

Aus der EP 0 366 619 A1 ist eine Einrichtung eines elektromagnetischen Drehzahlsensors bekannt, in welcher das Sensorsignal gleichgerichtet wird, und dessen Spitzen werte periodish in einem Kondensator gespeichert werden, wobei ein der Kondensatorspannung proportionales Signal als Schwellwert mit dem Sensorsignal verglichen wird.

Die genannten Signalgeber sind nur im dynamischen Betriebsfall verwendbar, da sie eine bestimmte Drehzahl bzw. eine bestimmte Zahl von Umdrehungen für die Bildung auswertbarer Schwellwerte benötigen, also erst nach einigen Umdrehungen bzw. ab einer Mindestdrehzahl ein verwertbares digitales Gebersignal abgeben.

Bei Motorsteuerungen in Kraftfahrzeugen ist es sehr wichtig, so früh wie möglich, am besten bereits bei Betriebsbeginn (bei eingeschalteter Versorgungspannung und vor dem Anlassen der Brennkraftmaschine), zu wissen, in welchem Zyklus (in welcher Stellung) sich der Motor befindet, um bestimmen zu können, welcher Zylinder als erster oder nächster mit Kraftstoff versorgt bzw. gezündet werden soll.

Aufgabe der Erfindung ist es, derartige Signalgeber so auszubilden, daß sie auch bei Betriebsbeginn im statischen Betriebsfall (bei Kfz-Brennkraftmaschinen: bei Motorstillstand mit an dem Signalgeber liegender Versorgungsspannung), ein verwertbares Gebersignal abgeben.

Diese Aufgabe wird durch die im kennzeichnenden Teil des Anspruchs 1 genannten Merkmale gelöst.

Damit wird erreicht, daß bei Betriebsbeginn, also bereits beim Einschalten der Versorgungsspannung (Zündung) und vor dem Anlassen des Motors, der wenigstens eine Schwellwert vorliegt, mit welchem das ebenfalls statisch bereits vorliegende Sensorsignal verglichen werden kann. Ein Ausführungsbeispiel der Erfindung ist im folgenden unter Bezugnahme auf aie schematische Zeichnung näher erläutert.

Dieses Ausführungsbeispiel beschreibt einen Nokkenwellengeber für eine Kraftfahrzeug-Brennkraftmaschine.

Mit der nicht dargestellten Ncckenwelle ist ein Geberteil 1 fest verbunden, welches sich bei laufender Brennkraftmaschine mit der Nockenwelle um die eigene Achse dreht. Dieses Geberteil weist ein Segment 1a und eine Segmentlücke 1b auf die sich beide jeweils über den halben Umfang des Geberteils erstrecken.

Dem Geberteil 1 gegenüber ist ein ortsfester Aufnehmer 2 angeordnet, der beispielsweise als Winkelimpulsgeber mit Auswertung der Phasenverschiebung zwischen Anregungssignal und Antwortsignal, wie beispielsweise in der DE-A-25 32 226 beschrieben, ausgebildet ist.

Dieser Aufnehmer liefert an seinem Ausgang von Betriebsbeginn (eingeschaltete Versorgungsspannung und Stillstand der Brennkraftmaschine) über Motorbetrieb (arbeitende Brennkraftmaschine) bis Betriebsende (Abschalten der Versorgungsspannung) ein analoges Signal s mit entsprechenden stetigen Übergängen. Dieses Signal wird einer Auswerteschaltung 3 zugeführt, die eine Einrichtung 3a zur Bildung eines Schwellwertes r aus dem Sensorsignal s aufweist, der beispielsweise dem Mittelwert aus den Extremwerten des Sensorsignals s entspricht.
Mit diesem Schwellwert r wird das Sensorsignal s in einem Komparator 3b verglichen, an dessen Ausgang ein digitales Gebersignal g erscheint, beispielsweise ein HIGH-Signal, wenn dem Aufnehmer das Segment 1a gegenübersteht, oder ein LOW-Signal, wenn dem Aufnehmer die Segmentlücke gegenübersteht.

Unabhängig vom Abstand des Geberteils 1 vom Aufnehmer 2, von welchem die Amplituden (die Extremwerte) des Sensorsignals s bestimmt werden, wird der Schwellwert immer so gelegt, daß Segment und Lücke als solche sicher erkannt werden.

Mit der Auswerteschaltung 3 bzw. mit der Einrichtung 3a zur Bildung des Schwellwertes r ist ein nicht-flüchtiger Speicher 4 verbunden, in den der ermittelte Schwellwert nach jeder Ermittlung, zumindest aber bei Betriebsende übertragen und bei Betriebsbeginn wieder in die Einrichtung 3a zurückübertragen wird (Nichtflüchtig bedeutet, daß der gespeicherte Wert auch dann erhalten bleibt, wenn die Versorgungsspannung abgeschaltet wird.) Eine Übertragung des Schwellwertes nach jeder Ermittlung hat den Vorteil, daß bei Betriebsende nicht erst abgespeichert werden muß, sondern die Versorgungsspannung sofort ohne weitere Maßnahmen abgeschaltet werden kann.

Dadurch ergibt sich der Vorteil, daß bei Bestriebsbeginn (nach Wiedereinschalten der Versorgungsspannung) sofort ein Schwellwert r zur Verfügung steht, mit welchem das Sensorsignal s verglichen werden kann, und eine Aussage gemacht werden kann, ob dem Aufnehmer gerade ein Segment oder eine Lücke gegenübersteht, noch bevor die Brennkraftmaschine angelassen wird.
Steht ein ausreichend schneller Mikroprozessor zur Verfügung, so können die Auswerteschaltung 3 (mit Schwellwertbildungseinrichtung 3a und Komparator 3b) und der Speicher 4 in diesem integriert sein, so daß als "externes" Bauele ment nur der Aufnehmer 2 vorgesehen ist, der direkt an den Mikroprozessor angeschlossen ist. In diesem Fall kann auch ein Programm für eine an sich bekannte Optimierung bzw. Nachregelung des Schwellwertes in Abhängigkeit von der Kurvenform des Sensorsignals vorgesehen werden.

Wird eine Sensorsignal-Auswertung mit zwei Schwellwerten vorgenommen, so wird jeweils das zuletzt ermittelte Schwellwertpaar nichtflüchtig abgespeichert und beim nächsten Betriebsbeginn wieder in die Auswerteschaltung übertragen.

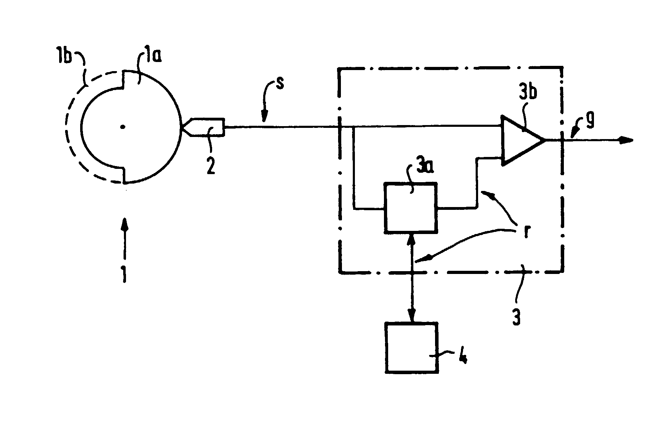

## Patentansprüche

1. Kurbel- oder Nockenwellensignalgeber für Kraftfahrzeug-Brennkraftmaschinen,
- mit einem mit wenigstens einem Zahn bzw. Segment (1a) und wenigstens einer Zahn- bzw. Segmentlücke (16) versehenen, drehbaren Geberteil (1),
- mit einem ortsfesten Aufnehmer (2), welcher derart gestaltet ist, daß bei eingeschalteter Versorgungsspannung auch vor dem Anlassen der Brennkraftmaschine ein dem ihm gegenüberstehenden Zahn- bzw. Segment (1a) oder Lücke (1b) des Geberteils (1) zugeordnetes Sensorsignal (s) erzeugt wird, und
- mit einer Auswerteschaltung (3,3a,3b), welche so ausgebildet ist, daß in ihr aus den Sensorsignalen wenigstens ein Schwellwert (r) gebildet und das Sensorsignal (s) durch Vergleich mit diesem wenigstens einen Schwellwert (r) in ein digitales Gebersignal (g) umgewandelt wird,
dadurch gekennzeichnet,
daß der Kurbel- oder Nockenwellensignalgeber so ausgebildet ist, daß der wenigstens eine Schwellwert (r) in periodischen Abständen oder bei Betriebsende der Brennkraftmaschine in einen nichtflüchtigen Speicher (4) übertragen wird, und bei erneutem Betriebsbeginn, d.h., beim Einschalten der Versorgungsspannung vor dem Anlassen der Brennkraftmaschine in die Auswerteschaltung (3,3a, 3b) rückübertragen wird.

2. Signalgeber nach Anspruch 1, dadurch gekennzeichnet, daß Auswerteschaltung (3) und nichtflüchtiger Speicher (4) in einem Mikroprozessor enthalten sind.

## Claims

1. Crankshaft or camshaft signal transmitter for motor vehicle internal combustion engines,
- with a rotatable transmitter part (1) provided with at least one tooth or segment (1a) and at least one tooth or segment gap (1b),
- with a stationary pickup (2) which is designed in such a way that with the supply voltage switched on, a sensor signal (s) associated with the tooth or segment (1a) or gap (1b) of the transmitter part (1) which lies opposite said stationary pickup is generated, even before the internal combustion engine is started, and
- with an evaluation circuit (3,3a,3b) which is designed in such a way that at least one threshold value (r) is formed in it from the sensor signals and the sensor signal (s) is converted into a digital transmitter signal (g) by comparison with this threshold value or values (r),
characterized in that the crankshaft or camshaft signal transmitter is designed in such a way that the threshold value or values (r) is/are transferred to a non-volatile memory (4) at periodic intervals or at the end of operation of the internal combustion engine and, when operation begins again, i.e. when the supply voltage is switched on, is/are transferred back into the evaluation circuit (3,3a,3b) before the internal combustion engine is started.

2. Signal transmitter according to Claim 1, characterized in that the evaluation circuit (3) and the non-volatile memory (4) are contained in a microprocessor.

## Revendications

1. Emetteur de signaux de vilebrequin ou d'arbre à cames de moteur à combustion interne de véhicule automobile,
- comportant un organe détecteur (1) tournant pourvu d'au moins une dent ou d'un segment (1a) et d'au moins un intervalle entre dents et segments (1b),
- comportant un capteur fixe (2) conformé de manière à produire, lorsque la tension d'alimentation est appliquée même avant le démarrage du moteur à combustion interne, un signal de capteur (s) correspondant aux dents ou segments (1a) ou intervalles (1b) de l'organe détecteur (1) situés en face de lui, et
- comportant un circuit d'exploitation (3,3a,3b), constitué de manière à y élaborer au moins une valeur de seuil (r) à partir des signaux de capteur, et à transformer le signal de capteur (s), par comparaison à cette au moins une valeur de seuil (r), en un signal d'émetteur numérique (g),
caractérisé en ce que
- l'émetteur de signaux de vilebrequin ou d'arbre à cames est constitué de manière que la au moins une valeur de seuil (r) soit transmise, à des intervalles de temps périodiques ou lorsque le moteur à combustion interne cesse de fonctionner, à une mémoire (4) non volatile, et, lors d'un nouveau début de fonctionnement, c'est-à-dire lorsque la tension d'alimentation est réappliquée avant le démarrage du moteur à combustion interne, soit retransmise au circuit d'exploitation (3,3a,3b).

2. Emetteur de signaux selon la revendication 1, caractérisé en ce que le circuit d'exploitation (3) et la mémoire (4) non volatile sont contenus dans un microprocesseur.
